# EUROPÄISCHE PATENTSCHRIFT

(11) **EP 1 697 651 B1**
(45) Veröffentlichungstag und Bekanntmachung des Hinweises auf die Patenterteilung: **11.04.2007**
(21) Anmeldenummer: 04803643.8
(22) Anmeldetag: 08.12.2004
(51) Int. Cl.: F16D 33/00, F16D 33/18, F16H 45/02, F02B 41/10

(54) **HYDRODYNAMISCHE KUPPLUNG**
HYDRODYNAMIC COUPLING
ACCOUPLEMENT HYDRODYNAMIQUE

(30) Priorität: 22.12.2003 DE 10360056
(43) Veröffentlichungstag der Anmeldung: 06.09.2006
(73) Patentinhaber: Voith Turbo GmbH & Co. KG, 89522 Heidenheim (DE)
(72) Erfinder: KLEY, Markus, 73479 Ellwangen (DE)
(74) Vertreter: Weitzel, Wolfgang
(86) Internationale Anmeldenummer: PCT/EP2004/013976
(87) Internationale Veröffentlichungsnummer: WO 2005/064183

(56) Entgegenhaltungen:
- DE-A1- 19 516 971
- US-B1- 6 471 021

## Beschreibung

Die Erfindung betrifft eine hydrodynamische Kupplung und dabei insbesondere die Lagerung der Schaufelräder.

Hydrodynamische Kupplungen sind bekannt. Diese dienen der Drehmomentübertragung von einem Antriebsstrang auf einen angetriebenen Strang. Der Antriebsstrang ist mit einem ersten Schaufelrad der hydrodynamischen Kupplung in eine Triebverbindung geschaltet und der angetriebene Strang mit einem zweiten Schaufelrad. Das erste Schaufelrad wird in der Regel als Pumpenrad und das zweite Schaufelrad als Turbinenrad bezeichnet.

Es ist bekannt, hydrodynamische Kupplungen verstärkt in sogenannten Turbocompoundsystemen zu verwenden. Solche Systeme beziehen sich auf einen Kraftfahrzeugantriebsstrang mit Abgasenergienutzung. Ein solcher Kraftfahrzeugantriebsstrang umfasst einen Verbrennungsmotor, in dessen Abgasstrom eine Abgasnutzturbine geschaltet ist. Der Verbrennungsmotor treibt naturgemäß eine Kurbelwelle an. Zugleich wird die Antriebsleistung der Abgasnutzturbine auf die Kurbelwelle übertragen. In die Triebverbindung zwischen der Abgasnutzturbine und der Kurbelwelle ist eine hydrodynamische Kupplung geschaltet, welche zunächst zur Drehmomentübertragung von der Abgasnutzturbine auf die Kurbelwelle dient. Die hydrodynamische Kupplung weist jedoch in der Regel eine Zweitfunktion auf, nämlich die einer hydrodynamischen Bremse. Eine solche hydrodynamische Bremse ist auch unter dem Begriff Retarder bekannt. Soll die hydrodynamische Kupplung als Retarder arbeiten, so wird eines ihrer beiden Schaufelräder mechanisch gegen Verdrehung verriegelt, und zwar jenes Schaufelrad, welches im Kupplungsbetrieb durch die Abgasnutzturbine angetrieben wird. Somit ergibt sich folgender Betriebszustand: Die Kurbelwelle treibt das nicht festgesetzte Schaufelrad an, welches über das Arbeitsmedium im Arbeitsraum der hydrodynamischen Kupplung Drehmoment auf das festgesetzte Schaufelrad überträgt und somit abgebremst wird. Dies führt zu einer verschleißfreien Abbremsung der Kurbelwelle und damit zur Abbremsung des Fahrzeugs.

In solchen Turbocompoundsystemen ist es sachdienlich, nicht von Pumpenrad und Turbinenrad zu sprechen, da, wie dargelegt, mal das eine Schaufelrad und mal das andere Schaufelrad angetrieben wird und somit als Pumpe arbeitet. Es ist daher üblich, das mit der Abgasnutzturbine in Triebverbindung geschaltete Schaufelrad als Primärrad zu bezeichnen und das mit der Kurbelwelle in Triebverbindung geschaltete Schaufelrad als Sekundärrad.

Die vorliegende Erfindung betrifft insbesondere eine hydrodynamische Kupplung, welche in einem solchen Turbocompoundsystem verwendet wird beziehungsweise einen entsprechenden Antriebsstrang.

Das Pumpenrad und Turbinenrad beziehungsweise das Primärrad und Sekundärrad einer hydrodynamischen Kupplung sind im beschriebenen System gegeneinander drehbar gelagert. Dabei ist die Lagerung in der Regel derart konstruiert, dass eine einzige Lageranordnung zwischen den beiden Rädern vorgesehen ist. Diese relative Lagerung kann beispielsweise zwei Kugellager umfassen, wie in der europäischen Patentanmeldung mit der Veröffentlichungsnummer EP 0 995 918 A2 beschrieben ist.

Um eine für den Einsatzzweck optimale Lagerung zu erreichen, sind schon viele Anstrengungen unternommen worden. So beschäftigt sich die genannte europäische Patentanmeldung mit dem in solchen Kugellagern verwendeten Schmiermittel. Entgegen früherer Ausführungen sind die Lager mit Schmierfett gefüllt und nach außen abgedichtet. Jedoch weist diese Lageranordnung wie auch andere vorher bekannte Lageranordnungen das Merkmal auf, dass es sich stets um Kugel- beziehungsweise Wälzlager handelt.

Dies hat folgenden Hintergrund: Selbstverständlich sind auch dem Konstrukteur auf dem Gebiet der hydrodynamischen Kupplungen Gleitlager bekannt. Solche Gleitlager wurden bisher jedoch als ungeeignet zur Lagerung der Schaufelräder von hydrodynamischen Kupplungen, insbesondere in Turbocompoundsystemen, angesehen. Bei solchen Kupplungen treten zum einen in manchen Betriebszuständen erhebliche Radial- und besonders Axialkräfte auf, welche durch das vorgesehene Lager abgefangen werden müssen. In anderen Betriebszuständen treten hingegen nur geringe Kräfte auf. Zudem variiert die Relativdrehzahl zwischen den Schaufelrädern, insbesondere bei Turbocompoundsystemen. So kann man im Turbokupplungsbetrieb von einer Relativdrehzahl, das heißt einem Drehzahlunterschied zwischen Primärrad und Sekundärrad, von ca. 120 bis 360 Umdrehungen pro Minute ausgehen. Dieser Drehzahlunterschied ist abhängig vom Schlupf der hydrodynamischen Kupplung, ferner von der Motordrehzahl und der Übersetzung zwischen der Kurbelwelle und der hydrodynamischen Kupplung. Im Retarderbetrieb bei 100 % Schlupf hingegen kann die Relativdrehzahl 4000 bis 12000 Umdrehungen pro Minute betragen. Insbesondere der vergleichsweise geringen Relativdrehzahl im Kupplungsbetrieb werden grundsätzlich Wälzlager insbesondere mit Fettschmierung eher gerecht.

Den bekannten Ausführungen von hydrodynamischen Kupplungen haftet jedoch der Nachteil an, dass die verwendeten Wälzlager nicht besonders für den Betrieb bei hohen Relativdrehzahlen geeignet sind, was zu einem vorzeitigen Lagerverschleiß führt.

Das Dokument US 6 471 021 B1 beschreibt eine hydrodynamische Kupplung und insbesondere einen hydrodynamischen Wandler mit einem Gleitlagerelement das von Arbeitsmedium durchspült wird.

Das Dokument DE 195 16 971 A1 beschreibt einen Verbrennungsmotor in Turbocompoundausführung mit einer Abgasbremse, wobei zwischen den Verbrennungsmotor und die Abgasbremse eine hydrodynamische Kupplung geschaltet ist. Im Bremsbetrieb wird über die hydrodynamische Kupplung Antriebsleistung vom Verbrennungsmotor auf eine Kraftturbine übertragen, welche Abgas gegen eine geschlossene Abgasbremsklappe bei einem hohen Druck pumpt.

Der Erfindung liegt die Aufgabe zugrunde, eine hydrodynamische Kupplung und insbesondere einen Antriebsstrang mit einer hydrodynamischen Kupplung anzugeben, welcher gegenüber dem Stand der Technik verbessert ist. Insbesondere sollen die oben beschriebenen Nachteile ausgeräumt werden.

Die erfindungsgemäße Aufgabe wird durch eine hydrodynamische Kupplung gemäß Anspruch 1 und einen Kraftfahrzeugantriebsstrang gemäß Anspruch 8 gelöst. Die Unteransprüche beschreiben besonders vorteilhafte Weiterbildungen der Erfindung.

Dem Erfinder ist es gelungen, entgegen den bisherigen Ausführungen ein Gleitlager als Relativlager zwischen Primärrad und Sekundärrad zu verwenden. Um die variierenden Axialkräfte in unterschiedlichen Betriebszuständen sicher beherrschen zu können, ohne dass die Gefahr des Überschreitens der Lagertragfähigkeit besteht, wird der Lagerdruck des Gleitlagers, das heißt der hydrostatische Druck des Lagerfluids, in Abhängigkeit des Druckes im Arbeitsraum, welcher durch den Umlauf des Arbeitsmediums ausgebildet wird, eingestellt. Besonders vorteilhaft wird dabei als Lagerfluid ein Teil des Arbeitsmediums verwendet, wobei dieser aus dem Arbeitsraum in das Lager geleitet wird.

Ein hoher Druck liegt im Arbeitsmediumkreislauf im Arbeitsraum der hydrodynamischen Kupplung am äußeren Rand vor, ein niedriger Druck hingegen im Inneren des torusförmigen Arbeitsraumes, im sogenannten Retarderauge. Um für große abzustützende Kräfte einen hohen Druck im Gleitlager erreichen zu können, wird daher vorteilhaft Arbeitsmedium vom äußeren Rand des sich im Arbeitsraum einstellenden Strömungskreislaufs abgegriffen. Hinsichtlich kurzer Leitungswege zwischen Arbeitsraum und Gleitlager ist eine entsprechende Abgriffsöffnung beispielsweise am radial inneren Umfang des torusförmigen Arbeitsraumes vorgesehen.

Gemäß einer vorteilhaften Ausführung der Erfindung ist das Gleitlager ein sogenanntes Axial-/Radiallager, das heißt ein Lager, welches sowohl Axial- als auch Radialkräfte aufnimmt. Insbesondere ist dieses Gleitlager das einzige Lager, was als Relativlager zwischen Primärrad und Sekundärrad vorgesehen ist.

Wenn ein Teil des Arbeitsmediums als Lagermedium vorgesehen ist, wird das Gleitlager vorteilhaft vom Retarderkreislauf mit Medium versorgt, welches anschließend zum Einlasskanal in den Retarder abgeführt wird. Bei entleertem Kreislauf bestünde die Gefahr, dass das Gleitlager trocken laufen würde. Ein entleerter Kreislauf kann jedoch durch eine geeignete Befüllungssteuerung zuverlässig vermieden werden.

Die erfindungsgemäße Gleitlagerausführung macht sich folgende Erkenntnis zunutze: Im Retarderbetrieb, bei dem große, über das Relativlager abzuführende Kräfte zwischen Primärrad und Sekundärrad auftreten, liegt im Arbeitsraum der hydrodynamischen Kupplung eine hohe Meridianströmungsgeschwindigkeit und somit ein hoher Strömungsdruck (hydrostatischer Druck, insbesondere am äußeren Rand des Strömungskreislaufs) vor. Da somit auch im Gleitlager erfindungsgemäß ein großer Druck aufgebaut wird, kann das Gleitlager große axiale Kräfte aufnehmen, ohne dass die Gefahr des Anlaufens der sich relativ zueinander bewegenden Lagerkomponenten besteht.

Im Kupplungsbetrieb hingegen liegt eine vergleichsweise geringe Meridianströmungsgeschwindigkeit und somit ein geringer Strömungsdruck vor. Die aufzunehmenden Axialkräfte sind gering. Aufgrund des niedrigeren Druckes im Arbeitsraum stellt sich auch im Gleitlager ein niedrigerer Druck ein. Ein solcher Druck ist jedoch in diesem Betriebszustand ausreichend, da die aufzunehmenden Axialkräfte gering sind.

Die Erfindung soll nachfolgend anhand eines Ausführungsbeispiels und den zugehörigen Figuren näher beschrieben werden.

Es zeigen:
- Figur 1: eine hydrodynamische Kupplung mit einem erfindungsgemäßen Gleitlager;
- Figur 2: die Anordnung einer hydrodynamischen Kupplung in einem Antriebsstrang.

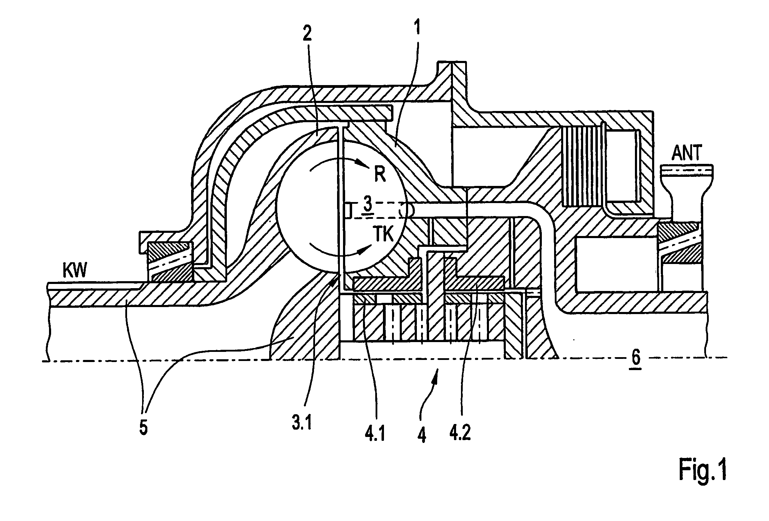

Die Figur 1 zeigt einen axialen Schnitt durch den wesentlichen Teilbereich einer erfindungsgemäß ausgebildeten hydrodynamischen Kupplung. Man erkennt das beschaufelte Primärrad 1 und das beschaufelte Sekundärrad 2. Die beiden Schaufelräder 1 und 2 sind derart gegenüberstehend angeordnet, dass sie einen torusförmigen Arbeitsraum 3 miteinander ausbilden. Bei Einsatz in einem Turbocompoundsystem wird im Kupplungsbetrieb das Primärrad 1 zumindest mittelbar über eine Abgasnutzturbine angetrieben. Dementsprechend wird das Arbeitsmedium im Primärrad 1 radial nach außen beschleunigt, und im Arbeitsraum 3 stellt sich eine Kreisströmung zwischen Primärrad 1 und Sekundärrad 2 mit einer Richtung ein, wie sie durch den Pfeil TK (Turbokupplungsbetrieb) bezeichnet ist. Durch den Aufbau dieser Kreislaufströmung wird Drehmoment vom Primärrad 1 auf das Sekundärrad 2 übertragen.

Im Retarderbetrieb wird das Primärrad 1 festgesetzt, das heißt mechanisch gegen Verdrehung verriegelt. Das Sekundärrad 2 wird von der Kurbelwelle eines Motors zumindest mittelbar angetrieben, so dass das Arbeitsmedium im Sekundärrad 2 radial nach außen beschleunigt wird und sich ein Arbeitsmediumkreislauf mit einer solchen Richtung einstellt, wie sie durch den Pfeil R angezeigt ist. Das vom Sekundärrad 2 auf das Primärrad 1 mittels des Strömungskreislaufes übertragene Drehmoment wird über einen geeigneten Verriegelungsmechanismus, beispielsweise einer Lamellenkupplung, abgeführt.

In der Figur 1 steht die Abkürzung ANT für Abgasnutzturbine, deren Lagerung rechts in der Figur 1 angedeutet ist, und die Abkürzung KW steht für Kurbelwelle, welche in der Regel durch ein geeignetes Getriebe auf der linken Seite der Figur 1 angeschlossen ist.

Das Sekundärrad 2 ist integral mit einer Retardereingangswelle 5 ausgebildet. Die Retardereingangswelle, welche auch als Kupplungsabtriebswelle bezeichnet werden könnte, wird - wie dargelegt - im Retarderbetrieb durch die Kurbelwelle angetrieben. Das Sekundärrad 2 ist mittels des Lagers 4, welches auf der Retardereingangswelle 5 ausgebildet ist, gelagert. Das Lager 4 ist erfindungsgemäß ein Gleitlager mit zwei sich relativ zueinander bewegenden Lagerkomponenten 4.1 und 4.2. Die erste Lagerkomponente 4.1 läuft mit der Geschwindigkeit der Retardereingangswelle 5 und damit der Geschwindigkeit des Sekundärrades 2 um. Die zweite Lagerkomponente 4.2 läuft mit der Geschwindigkeit des Primärrads 1 um.

Zwischen den beiden Lagerkomponenten wird im Betrieb ein Film eines Lagermediums ausgebildet. Dieses Lagermedium ist Teil des Arbeitsmediums, welches aus dem Arbeitsraum 3 über die Abgriffstelle 3.1, welche auf dem Radius des kleinsten Umfangs des Arbeitsraums 3 liegt, abgeführt wird. Wie man sieht, kann durch die gewählte Kanalführung, zunächst radial nach innen, dann in Axialrichtung in das Lager 4, ein äußerst kurzer Strömungsweg zwischen dem Arbeitsraum 3 und dem Lager 4 erreicht werden, was zu einem geringen Druckverlust führt. Anschließend strömt das Arbeitsmedium axial aus dem Lager 4 aus, wird wiederum radial nach innen umgelenkt und strömt in den Einlasskanal 6, über welchen Arbeitsmedium in den Arbeitsraum 3 geführt wird, ab.

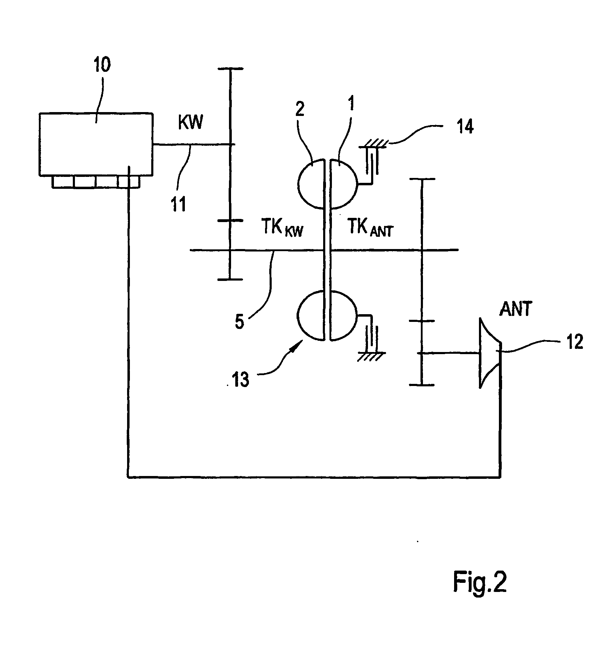

In der Figur 2 ist die Anordnung einer entsprechenden hydrodynamischen Kupplung 13 in einer Triebverbindung zwischen einer Kurbelwelle 11, welche von einem Verbrennungsmotor 10 angetrieben wird, und einer Abgasnutzturbine 12, welche durch die Abgase des Verbrennungsmotors 10 angetrieben wird, gezeigt. Das Primärrad 1 der hydrodynamischen Kupplung kann mittels der Lamellenkupplung 14 abgebremst und gegen Verdrehung verriegelt werden. In diesem Zustand arbeitet die hydrodynamische Kupplung als Retarder, das heißt die Kurbelwelle 11, welche über ein Getriebe mit der Retardereingangswelle 5 verbunden ist, treibt das Sekundärrad 2 an und wird dadurch abgebremst.

### Bezugszeichenliste

- 1: Primärrad
- 2: Sekundärrad
- 3: Arbeitsraum
- 4: Lager
- 4.1: erste Lagerkomponente
- 4.2: zweite Lagerkomponente
- 5: Retardereingangswelle
- 6: Einlasskanal
- 10: Verbrennungsmotor
- 11: Kurbelwelle
- 12: Abgasnutzturbine
- 13: hydrodynamische Kupplung
- 14: Lamellenkupplung

## Patentansprüche

1. Kraftfahrzeugantriebsstrang mit einem Turbocompoundsystem
1.1 mit einem Verbrennungsmotor (10), der eine Kurbelwelle (11) antreibt;
1.2 mit einer Abgasnutzturbine (12), welche in eine Triebverbindung mit der Kurbelwelle (11) derart schaltbar ist, dass die Kurbelwelle (11) von der Abgasnutzturbine (12) angetrieben wird;
1.3 in die Triebverbindung ist eine hydrodynamische Kupplung (13) eingebracht, welche ein beschaufeltes Primärrad (1) und ein beschaufeltes Sekundärrad (2) aufweist, wobei das Primärrad (1) und das Sekundärrad (2) miteinander einen mit Arbeitsmedium befüllbaren Arbeitsraum (3) ausbilden und das Primärrad (1) durch die Abgasnutzturbine (12) zumindest mittelbar angetrieben wird;
1.4 wobei die hydrodynamische Kupplung (13) zwei Betriebsmodi aufweist, umfassend
1.5 einen ersten Kupplungsbetriebsmodus, in welchem das Primärrad (1) durch die Abgasnutzturbine (12) angetrieben wird und über einen Strömungskreislauf des Arbeitsmediums im Arbeitsraum (3) das Sekundärrad (2) durch Drehmomentübertragung antreibt; so dass das Primärrad (1) und das Sekundärrad (2) mit einer relativ zueinander verschiedener Drehzahl umlaufen, und in der hydrodynamischen Kupplung (13) ein Schlupf von weniger als 100% vorliegt;
1.6 einen Retarderbetriebsmodus, in welchem das Primärrad (1) mechanisch gegen Verdrehen verriegelt ist, und das Sekundärrad (2) von der Kurbelwelle (11) angetrieben wird; so dass in der hydrodynamischen Kupplung (13) ein Schlupf von 100% vorliegt;
1.7 das Primärrad (1) und das Sekundärrad (2) sind gegeneinander drehbar gelagert, wobei ein Lager (4) zumindest mittelbar zwischen dem Primärrad (1) und dem Sekundärrad (2) eingebracht ist, welches die zwischen den Schaufelrädern (1, 2) wirkenden Radialkräfte und/oder Axialkräfte aufnimmt;
**gekennzeichnet durch** die folgenden Merkmale:
1.8 das Lager (4) ist als Gleitlager ausgebildet, zwischen dessen sich relativ zueinander bewegenden Lagerkomponenten (4.1, 4.2) beim Betrieb der hydrodynamischen Kupplung ein Film eines mit hydrostatischem Druck beaufschlagten Lagerfluids ausgebildet wird, und
1.9 der Druck des Lagerfluids abhängig vom im Arbeitsraum (3) aufgebauten Druck des Arbeitsmediums ist.

2. Antriebsstrang gemäß Anspruch 1, **dadurch gekennzeichnet, dass** das Lagerfluid ein Teil des Arbeitsmediums ist, welcher aus dem Arbeitsraum (3) in das Lager (4) geleitet wird.

3. Kraftfahrzeugantriebsstrang gemäß einem der Ansprüche 1 oder 2, **dadurch gekennzeichnet, dass** das Lager (4) ein Axial-/Radiallager ist.

4. Kraftfahrzeugantriebsstrang gemäß einem der Ansprüche 2 oder 3, **dadurch gekennzeichnet, dass** der Teil des Arbeitsmediums, welcher aus dem Arbeitsraum (3) in das Lager (4) geleitet wird, vom äußeren Rand des sich im Arbeitsraum (3) einstellenden Strömungskreislauf abgegriffen wird.

5. Kraftfahrzeugantriebsstrang gemäß einem der Ansprüche 1 bis 4, **dadurch gekennzeichnet, dass** das Sekundärrad (2) drehfest von einer Retardereingangswelle (5) getragen wird, und das Primärrad (1) mittels des Lagers (4) drehbar gegenüber und auf der Retardereingangswelle (5) gelagert ist.

6. Kraftfahrzeugantriebsstrang gemäß einem der Ansprüche 1 bis 5, **dadurch gekennzeichnet, dass** zwischen dem Primärrad (1) und dem Sekundärrad (2) ein einziges Lager (4) angeordnet ist.

7. Kraftfahrzeugantriebsstrang gemäß einem der Ansprüche 1 bis 6, **dadurch gekennzeichnet, dass** das Primärrad (1) durch eine Lamellenkupplung (14) mechanisch gegen Verdrehen verriegelbar ist.

8. Kraftfahrzeugantriebsstrang gemäß einem der Ansprüche 1 bis 7, **dadurch gekennzeichnet, dass** das Arbeitsmedium der hydrodynamischen Kupplung (13) das Kühlmedium eines Kraftfahrzeugkühlkreislaufes, insbesondere Wasser oder ein Wassergemisch, ist.

## Claims

1. A motor-vehicle drive train, comprising a turbocompound system
1.1 with an internal combustion engine (10) driving a crankshaft (11);
1.2 with an exhaust gas utilization turbine (12) which can be switched to a drive connection with the crankshaft (11) in such a way that the crankshaft (11) is driven by the exhaust gas utilization turbine (12);
1.3 a hydrodynamic coupling (13) is introduced into the drive connection which comprises a bladed primary wheel (1) and a bladed secondary wheel (2), with the primary wheel (1) and the secondary wheel (2) jointly forming a working chamber (3) which can be filled with working medium and the primary wheel (1) being driven by the exhaust gas utilization turbine (12) at least indirectly;
1.4 with the hydrodynamic coupling (13) comprising two operating modes, comprising
1.5 a first coupling operating mode in which the primary wheel (1) is driven by the exhaust gas utilization turbine (12) and drives the secondary wheel (2) by torque transmission via a flow circulation of the working medium in the working chamber (3), so that the primary wheel (1) and the secondary wheel (2) revolve with a speed which differs relative to each other and in which there is a drive slip of less than 100% in the hydrodynamic coupling (13);
1.6 a retarder operating mode in which the primary wheel (1) is mechanically locked against twisting and the secondary wheel (2) is driven by the crankshaft (11), so that there is a drive slip of 100% in the hydrodynamic coupling;
1.7 the primary wheel (1) and the secondary wheel (2) are held to be rotatable against each other, with a bearing (4) being introduced at least indirectly between the primary wheel (1) and the secondary wheel (2) which absorbs the radial forces and/or axial forces acting between the blade wheels (1, 2); **characterized by** the following features:
1.8 the bearing (4) is arranged as a slide bearing between whose bearing components (4.1, 4.2) which move relative towards each other a film of a bearing fluid pressurized with hydrostatic pressure is formed during the operation of the hydrodynamic coupling, and
1.9 the pressure of the bearing fluid is dependent upon the pressure of the working medium built up in the working chamber (3).

2. A drive train according to claim 1, **characterized in that** the bearing fluid is a part of the working medium which is guided from the working chamber (3) into the bearing (4).

3. A motor-vehicle drive train according to one of the claims 1 or 2, **characterized in that** the bearing (4) is an axial/radial bearing.

4. A motor-vehicle drive train according to one of the claims 2 or 3, **characterized in that** the part of the working medium which is guided from the working chamber (3) into the bearing (4) is taken from the outer edge of the flow circulation obtained in the working chamber (3).

5. A motor-vehicle drive train according to one of the claims 1 to 4, **characterized in that** the secondary wheel (2) is carried in a torsionally rigid manner by a retarder input shaft (5) and the primary wheel (1) is held rotatable relative to and on the retarder input shaft (5) by means of the bearing (4).

6. A motor-vehicle drive train according to one of the claims 1 to 5, **characterized in that** the a single bearing (4) is arranged between the primary wheel (1) and the secondary wheel (2).

7. A motor-vehicle drive train according to one of the claims 1 to 6, **characterized in that** the primary wheel (1) can be locked mechanically against twisting by means of a multiple-disk clutch (14).

8. A motor-vehicle drive train according to one of the claims 1 to 7, **characterized in that** the working medium of the hydrodynamic coupling (13) is the cooling medium of a motor-vehicle cooling circulation, especially water or a water mixture.

## Revendications

1. Chaîne cinématique de véhicule avec un système turbocompound,
1.1 avec un moteur à combustion interne (10) entraînant un vilebrequin (11);
1.2 avec une turbine d'utilisation des gaz d'échappement (12) qui peut être embrayée en liaison motrice avec le vilebrequin (11) de telle sorte que le vilebrequin (11) est entraîné par la turbine d'utilisation des gaz d'échappement (12) ;
1.3 la liaison motrice inclut un accouplement hydrodynamique (13) comprenant une roue à aubes primaire (1) et une roue à aubes secondaire (2), la roue primaire (1) et la roue secondaire (2) formant ensemble un espace de travail (3) qui peut être rempli de fluide de travail et la roue primaire (1) étant entraînée au moins indirectement par la turbine d'utilisation des gaz d'échappement (12) ;
1.4 l'accouplement hydrodynamique (13) présentant deux modes de fonctionnement, à savoir
1.5 un premier mode de fonctionnement en embrayage, dans lequel la roue primaire (1) est entraînée par la turbine d'utilisation des gaz d'échappement (12) et entraîne la roue secondaire (2) par transmission du couple de rotation par l'intermédiaire d'un circuit de circulation du fluide de travail dans l'espace de travail (3), de sorte que la roue primaire (1) et la roue secondaire (2) tournent à une vitesse de rotation différente l'une de l'autre, et qu'il existe dans l'accouplement hydrodynamique (13) un patinage à plus de 100%;
1.6 un mode de fonctionnement en retardateur, dans lequel la roue primaire (1) est verrouillée mécaniquement pour empêcher sa rotation et la roue secondaire (2) est entraînée par le vilebrequin (11), de sorte qu'il se crée dans l'accouplement hydrodynamique (13) un patinage à 100 % ;
1.7 la roue primaire (1) et la roue secondaire (2) sont supportées de façon à pouvoir tourner l'une par rapport à l'autre, un palier (4) étant introduit au moins indirectement entre la roue primaire (1) et la roue secondaire (2) et absorbant les forces radiales et/ou axiales agissant entre les roues à aubes (1,2);
**caractérisée en ce que**:
1.8 le palier (4) est conformé comme un palier de glissement, entre les composants de palier (4.1, 4.2), mobiles l'un par rapport à l'autre, de laquelle se crée pendant le fonctionnement de l'accouplement hydrodynamique un film d'un fluide de palier soumis à une pression hydrostatique, et
1.9 la pression du fluide de palier dépend de la pression du fluide de travail constituée dans l'espace de travail (3).

2. Chaîne cinématique selon la revendication 1, **caractérisée en ce que** le fluide de palier est une partie du fluide de travail, qui est amenée de l'espace de travail (3) au palier (4).

3. Chaîne cinématique de véhicule selon l'une des revendications 1 ou 2, **caractérisée en ce que** le palier (4) est un palier axial/radial.

4. Chaîne cinématique de véhicule selon l'une des revendications 2 ou 3, **caractérisée en ce que** la partie du fluide de travail amenée de l'espace de travail (3) au palier (4) est captée sur le bord extérieur du circuit d'écoulement qui se crée dans l'espace de travail (3).

5. Chaîne cinématique de véhicule selon l'une des revendications 1 à 4, **caractérisée en ce que** la roue secondaire (2) est supportée de manière solidaire en rotation par un arbre d'entrée de retardateur (5) et la roue primaire (1) est supportée au moyen du palier (4) avec possibilité de rotation par rapport à l'arbre d'entrée de retardateur (5) et sur celui-ci.

6. Chaîne cinématique de véhicule selon l'une des revendications 1 à 5, **caractérisée en ce qu'**un seul palier (4) est disposé entre la roue primaire (1) et la roue secondaire (2).

7. Chaîne cinématique de véhicule selon l'une des revendications 1 à 6, **caractérisée en ce que** la roue primaire (1) peut être verrouillée mécaniquement par un embrayage à disques multiples (14) pour empêcher sa rotation.

8. Chaîne cinématique de véhicule selon l'une des revendications 1 à 7, **caractérisée en ce que** le fluide de travail de l'accouplement hydrodynamique (13) est le fluide de refroidissement d'un circuit de refroidissement du véhicule à moteur, en particulier de l'eau ou un mélange à base d'eau.
